# EUROPÄISCHE PATENTSCHRIFT

(11) **EP 1 567 800 B1**
(45) Veröffentlichungstag und Bekanntmachung des Hinweises auf die Patenterteilung: **25.03.2009**
(21) Anmeldenummer: 04798203.8
(22) Anmeldetag: 15.11.2004
(51) Int. Cl.: F16L 37/138

(54) **STECKBARER UND VERRASTBARER LEITUNGSVERBINDER**
PLUGGABLE AND LOCKABLE LINE CONNECTOR
RACCORD DE CONDUITE EMBOITABLE ET BLOCABLE

(30) Priorität: 17.12.2003 DE 20319558 U
(43) Veröffentlichungstag der Anmeldung: 31.08.2005
(60) Teilanmeldung: 08169594.2
(73) Patentinhaber: Voss Automotive GmbH, 51688 Wipperfürth (DE)
(72) Erfinder: BILSTEIN, Rozália, 51688 Wipperfürth (DE); HAGEN, Harald, 51688 Wipperfürth (DE); ISENBURG, Marco, 40885 Ratingen (DE)
(74) Vertreter: Patentanwälte Dr. Solf & Zapf
(86) Internationale Anmeldenummer: PCT/EP2004/052958
(87) Internationale Veröffentlichungsnummer: WO 2005/059426

(56) Entgegenhaltungen:
- EP-A- 0 307 971
- AU-A- 1 478 176
- US-A- 5 437 650
- US-A1- 2003 102 667
- US-B1- 6 338 506

## Beschreibung

Die vorliegende Erfindung betrifft einen steckbaren und verrastbaren Leitungsverbinder mit einem Verbinderstück zum Anschluß mindestens einer Medienleitung, insbesondere Kraftstoffleitung, an ein Verbindergegenstück, nach dem Oberbegriff des Anspruchs 1.

Das Dokument US 5 437 650 beschreibt einen Kanülen-Verbinder, der grundsätzlich als Leitungsverbinder im Sinne des Oberbegriffs des Anspruchs 1 zu bezeichnen ist. Dabei ist ein Sicherungselement in Form eines umfangsgemäß geschlossenen Verriegelungsrings vorgesehen, der verschiebbar auf Federarmen (Segmenten) sitzt. Dabei weisen die Federarme einen mittigen Übergangsabschnitt in Form eines äußeren, radial nach außen vorspringenden Wulstansatzes auf. Der Verriegelungsring wirkt mit diesem Ansatz derart rastend zusammen, dass er in zwei Stellungen jeweils über diese Rastmittel fixiert ist. Da der Verriegelungsring aber einen bestimmten Innendurchmesser aufweist, mit dem er über den Ansatz jeweils bewegt werden muss, dürfte die Rastfunktion nicht optimal sein, bzw. in diesem Bereich dürfte ein schneller Verschleiß in der Weise auftreten, dass durch Abnutzung des Ansatzes die Rastfunktion recht schnell beeinträchtigt sein dürfte.

Ein weiterer Leitungsverbinder ist beispielsweise in der DE 29 52 468 A1 beschrieben. Dabei ist das mit einer Rohrleitung zu verbindende Verbinderstück mit seinem als Steckerschaft ausgebildeten Steckabschnitt in eine Bohrung des Steckabschnittes des Verbindergegenstückes einsteckbar. Hierbei übergreift das Verbinderstück mit Federarmen einen mit einer äußeren Ringwulst versehenen Kragen des Verbindergegenstückes. Zur Sicherung dieser Verrastung ist als Sicherungselement eine Haltehülse von hinten über die Federarme aufschiebbar. Eine axiale Sicherung dieser Haltehülse erfolgt mittels auf der Außenseite der Federarme angeformter Schnappwülste, die in eine Ringnut in der Innenseite der Haltehülse einrasten, wenn die Haltehülse sich in ihrer Endstellung (Sicherungsstellung) befindet. Die Verrastung erfolgt somit im freien Endbereich der Federarme mit einem in Umfangsrichtung geschlossen, durchgehenden Hülsenabschnitt der Haltehülse, was die Handhabung erschwert.

Der vorliegenden Erfindung liegt die Aufgabe zugrunde, einen Leitungsverbinder der genannten Art bezüglich seiner Sicherheit gegen ungewolltes Lösen der Steckverbindung sowie auch bezüglich seiner Handhabung zu verbessern.

Erfindungsgemäß wird dies durch die Merkmale des Anspruchs 1 erreicht.

Erfindungsgemäß ist demnach das Sicherungselement derart ausgebildet, dass eine Trennung seiner Sicherungsfunktion und seiner Rastfunktion erreicht wird. Konstruktiv sind dazu ein geschlossener Sperrringabschnitt und mehrere radialelastische Sicherungstastarme in einer axial versetzten Anordnung vorgesehen. Durch diese Funktionstrennung wird eine sichere Arretierung der Federarme des Verbinderstückes erreicht, indem der Sperrringabschnitt die Federarme mit geringem Spiel umschließt, und die Rastung kann unabhängig davon so ausgelegt sein, dass eine gute Handhabung beim Betätigen des Sicherungselementes erreicht wird.

In berorzugter Ausgestallung der Erfindung ist das Sicherungselement auch in der Ausgangsstellung über die Rastmittel fixiert, wobei die Rastmittel derart ausgebildet sind, dass eine zur Bewegung des Sicherungselementes aus der Ausgangsstellung in die Sicheningsstellung aufzubringende Verschlußkraft kleiner ist als eine zur umgekehrten Bewegung aus der Sicherungsstellung in Richtung der Ausgangsstellung aufzubringende Öffnungskraft.

Durch die höhere Öffnungskraft wird eine erhöhte Sicherheit gegen ungewolltes Lösen erreicht, und die relativ geringere Verschlußkraft trägt zu einer einfachen Handhabung beim Steckvorgang bei.

Zusätzlich dazu kann vorgesehen sein, dass das Sicherungselement mit den Rastmitteln sowie die Federarme mit ihren Rastansätzen in Anpassung an das Verbindergegenstück derart ausgebildet sind, dass das Sicherungselement als manueller Handhabungsangriff zum Stecken der Verbindung verwendbar ist, wobei durch manuelle Beaufschlagung (nur) des Sicherungselementes mit einer in Steckrichtung wirkenden Steckkraft zuerst die Steckabschnitte bis in die verrastete Stellung der Federarme zusammensteckbar sind und erst dann das Sicherungselement bis in die Sicherungsstellung bewegbar ist. Durch diese vorteilhafte Ausgestaltung ist es möglich, die Steckverbindung allein durch Ergreifen des Sicherungselementes zu stecken. Umgekehrt kann das Sicherungselement auch als Handhabe zum Lösen dienen, indem durch manuelle Beaufschlagung mit einer Lösekraft das Sicherungselement erst in Richtung seiner Ausgangsstellung zurückbewegt wird, und anschließend wird über einen Bewegungsanschlag das Verbinderstück mitgenommen und von dem Verbindergegenstück getrennt.

Diese Ausgestaltung führt zu einer einfachen und komfortablen Handhabung beim Stecken und Lösen. Dazu ist es zudem vorteilhaft, wenn die Rastmittel und die Federarme mit den Rastansätzen in Anpassung an das Verbindergegenstück so ausgebildet sind, dass die zur Bewegung des Sicherungselementes aus der Ausgangsstellung in die Sicherungsstellung aufzubringende Verschlußkraft größer als die zum Zusammenstecken der Steckabschnitte bis in ihre verrastete Stellung aufzubringende Steckkraft ist. In weiterer vorteilhafter Ausgestaltung ist dazu das Verbinderstück im zusammenwirkenden Bereich der Federarme und des Sicherungselementes derart ausgebildet, dass die Verschlußkraft während des Steckvorgangs zeitweise durch radiales Spreizen der Federarme des Verbinderstückes erhöht wird, wobei vorzugsweise am äußeren Umfang der Federarme radial vorstehende Ansätze angeordnet sind. Diese Ansätze wirken in einer leicht gespreizten Stellung der Federarme als Anschläge für das Sicherungselement. Die Ansätze weisen aber eine radial derart geringe Höhe auf, dass nach dem Verrasten der Federarme das Sicherungselement ungehindert über die Ansätze hinaus weiter in die Sicherungsstellung bewegbar ist.

Weitere vorteilhafte Ausgestaltungsmerkmale der Erfindung sind in den abhängigen Ansprüchen sowie der folgenden Beschreibung enthalten.

Anhand eines in der Zeichnung veranschaulichten, bevorzugten Ausführungsbeispiels soll die Erfindung genauer erläutert werden. Dabei zeigen:
Fig. 1 eine Perspektivansicht eines Verbinderstückes eines erfindungsgemäßen Leitungsverbinders,
Fig. 2 eine gesonderte Perspektivansicht eines Sicherungselementes des erfindungsgemäßen Leitungsverbinders in einer zu dem Verbinderstück gemäß Fig. 1 zum Aufsetzen lagerichtigen Anordnung,
Fig. 3 eine Längsschnittansicht eines Verbindergegenstückes,
Fig. 4 eine Seitenansicht in Pfeilrichtung IV gemäß Fig. 1 auf das Verbinderstück mit aufgesetztem und in einer Ausgangsstellung angeordnetem Sicherungselement,
Fig. 5 einen Schnitt in der Ebene V - V gemäß Fig. 4 mit zusätzlich eingezeichnetem Verbindergegenstück in der zusammengesteckten und verrasteten, jedoch noch nicht durch das Sicherungselement gesicherten Position,
Fig. 6 eine Darstellung analog zu Fig. 5, jedoch in der Sicherungsstellung des Sicherungselementes,

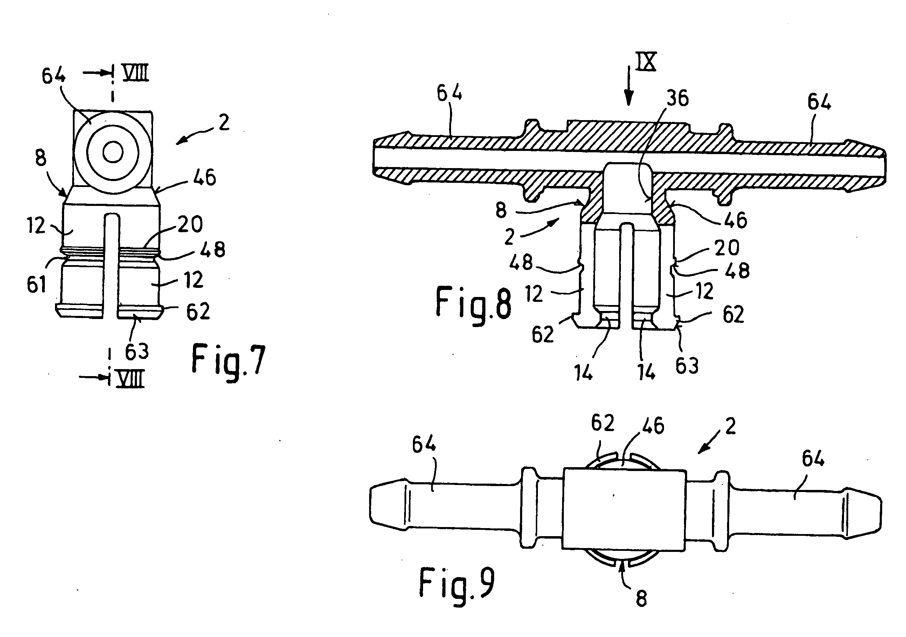

Fig. 7 eine Ansicht analog zu Fig. 4 nur des Verbinderstückes ohne Sicherungselement,
Fig. 8 einen Schnitt analog zu Fig. 5 in der Ebene VIII - VIII gemäß Fig. 7,
Fig. 9 eine Draufsicht auf das Verbinderstück in Pfeilrichtung IX gemäß Fig. 8,
Fig. 10 eine Draufsicht des Sicherungselementes in Pfeilrichtung X gemäß Fig. 2,
Fig. 11 einen Schnitt durch das Sicherungselement in der Ebene XI **-** XI gemäß Fig. 10 und
Fig. 12 eine Ausschnittvergrößerung im Bereich XII gemäß Fig. 11 zur Erläuterung der Geometrie im Bereich der Rastmittel des Sicherungselementes.

In den verschiedenen Figuren der Zeichnung sind gleiche Teile stets mit den gleichen Bezugszeichen versehen und brauchen daher in der Regel auch jeweils nur einmal beschrieben zu werden.

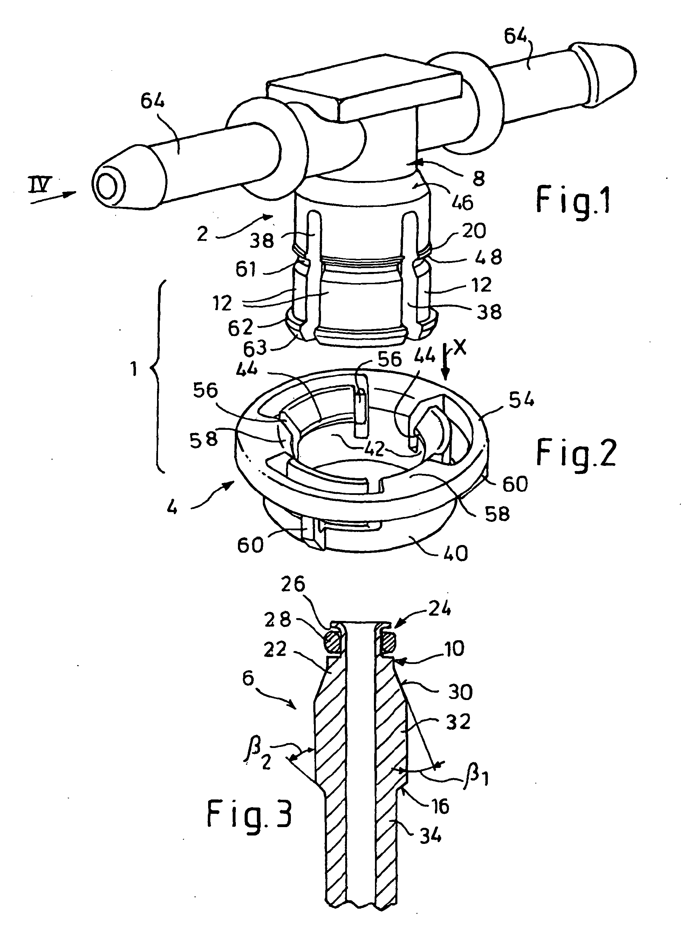

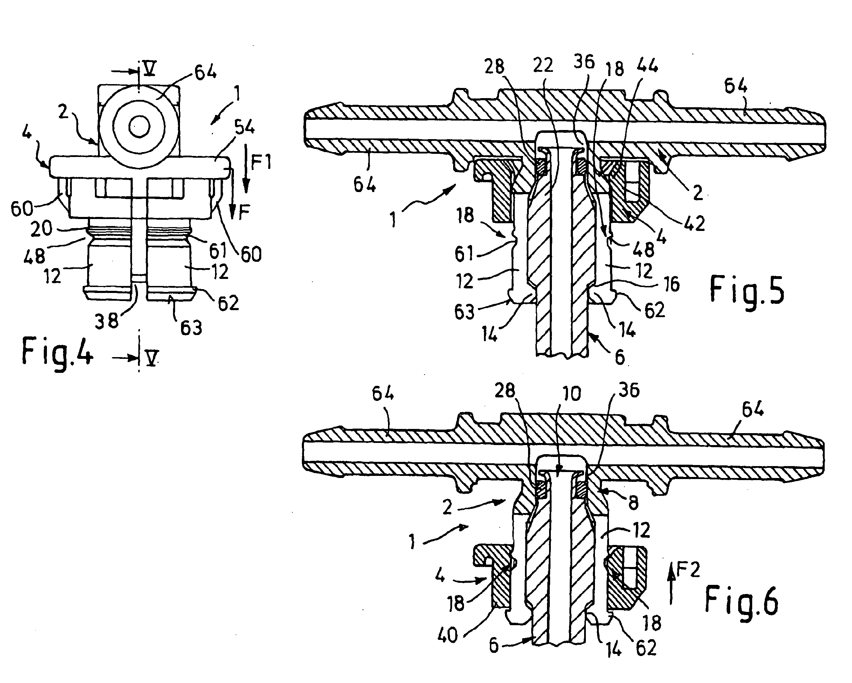

Wie sich zunächst aus Fig. 1 bis 3 ergibt, besteht ein efindungsgemäßer Leitungsverbinder 1 aus einem Verbinderstück 2 und einem Sicherungselement 4. Das Verbinderstück 2 dient zum Anschluß mindestens einer nicht dargestellten Medienleitung, insbesondere Kraftstoffleitung, an ein Verbindergegenstück 6. Dazu wird auch auf die Fig. 5 und 6 verwiesen.

Das Verbinderstück 2 weist einen Steckabschnitt 8 auf, der mit einem komplementären Steckabschnitt 10 des Verbindergegenstückes 6 mediendicht zusammensteckbar ist. Ferner weist das Verbinderstück 2 mindestens zwei, insbesondere - wie dargestellt - vier sich in Steckrichtung erstreckende, radial elastische Federarme 12 auf, die an ihren freien Enden Rastansätze 14 zum rastenden, kraftformschlüssigen Hintergreifen einer Raststufe 16 des Verbindergegenstückes 6 in der zusammengesteckten Stellung aufweisen (vergleiche Fig. 5 und 6).

Wie sich weiter insbesondere aus Fig. 5 und 6 ergibt, ist das Sicherungselement 4 in axialer Richtung zwischen einer die Federarme 12 für eine radiale Rastbewegung freigebenden Ausgangsstellung (Fig. 4 und 5) und einer die Federarme 12 zur Sicherung gegen ihre Rastbewegung umschließenden Sicherungsstellung (Fig. 6) bewegbar. Dabei ist das Sicherungselement 4 in der Sicherungsstellung (Fig. 6) über Rastmittel 18 kraftformschlüssig fixiert.

Zweckmäßig ist das Sicherungselement 4 auch in der Ausgangsstellung gemäß Fig. 4 und 5 über die Rastmittel 18 fixiert. Dabei sind die Rastmittel 18 derart ausgebildet, dass eine zur Bewegung des Sicherungselementes 4 aus der Ausgangsstellung in die Sicherungsstellung aufzubringende Verschlußkraft F1 (siehe Fig. 4) kleiner ist als eine zur umgekehrten Bewegung aus der Sicherungsstellung in Richtung der Ausgangsstellung aufzubringende Öffnungskraft F2 (siehe Fig. 6). Die konstruktiven Maßnahme hierfür werden im folgenden noch genauer erläutert werden.

Es ist weiterhin vorteilhaft, wenn das Sicherungselement 4 mit den Rastmitteln 18 sowie die Federarme 12 mit ihren Rastansätzen 14 in Anpassung an die Ausgestaltung des Verbindergegenstückes 6 derart ausgebildet sind, dass das Sicherungselement 4 als manueller Handhabungsangriff zum Stecken (und Lösen) der Verbindung verwendbar ist, indem durch manuelle Beaufschlagung des Sicherungselementes 4 mit einer in Steckrichtung wirkenden Steckkraft F zuerst die Steckabschnitte 8, 10 bis in die verrastete Stellung der Federarme 12 zusammensteckbar sind und erst dann das Sicherungselement 4 bis in seine Sicherungsstellung bewegbar ist. Dazu sind die Rastmittel 18 und die Federarme 12 mit den Rastansätzen 14 in Anpassung an das Verbindergegenstück 6 so ausgebildet, dass die zur Bewegung des Sicherungselementes 4 aus der Ausgangsstellung in die Sicherungsstellung aufzubringende Verschlußkraft F1 größer als die zum Zusammenstecken der Steckabschnitte 8, 10 bis in ihre verrastete Steilung aufzubringende Steckkraft F ist (vgl. Fig. 4). Hierbei ist es besonders vorteilhaft, wenn das Verbinderstück 2 in dem miteinander zusammenwirkenden Bereich der Federarme 12 und des Sicherungselementes 4 derart ausgebildet ist, dass die Verschlußkraft F1 während des Steckvorgangs zeitweise durch radiales Spreizen der Federarme 12 des Verbinderstückes 2 erhöht wird. Vorzugsweise sind dabei am äußeren Umfang der Federarme 12 radial vorstehende Ansätze 20 angeordnet, die in einer beim anfänglichen Steckvorgang leicht gespreizten Stellung der Federarme 12 als Anschläge für das Sicherungselement 2 fungieren, so dass das Sicherungselement 4 noch nicht in seine Sicherungsstellung bewegt werden kann, sondern erst das Verbinderstück 2 mit dem Verbindergegenstück 6 zusammengesteckt wird, bis die Federarme 12 radial nach innen einrasten. Nachfolgend kann dann das Sicherungselment 4 ungehindert über die Ansätze 20 weiter in die Sicherungsstellung bewegt werden.

In der dargestellten, bevorzugten Ausführungsform ist der Leitungsverbinder 1 speziell für ein Verbindergegenstück 6 konzipiert, wie es in Fig. 3, 5 und 6 dargestellt ist. Dabei ist der Steckabschnitt 10 als Einsteckteil 22 (Steckerschaft) ausgebildet. Dieses Einsteckteil 22 weist an seinem freien Ende einen Dichtabschnitt 24 mit einem in einer Ringnut 26 sitzenden Dichtring 28 auf. An den Dichtabschnitt 24 schließt sich über eine konusfläche 30 ein im Querschnitt erweiteter Bereich 32 an, der über die Raststufe 16 in einen verjüngten Bereich 34 übergeht (siehe dazu insbesondere Fig. 3). Die beim Steckvorgang zum radialen Spreizen der Federarme 12 des Verbinderstückes 2 vorgesehene Konusfläche 30 schließt mit der Steckachse einen relativ flachen Winkel β₁ ein, der insbesondere im Bereich von etwa 20° liegen kann. Die Raststufe 16 ist als konische Schrägfläche mit einem relativ steileren Winkel β₂ zur Steckachse von insbesondere etwa 50° ausgebildet. Aus den unterschiedlichen Winkel β₁ und β₂ ergibt sich, dass eine Lösekraft größer als eine Steckkraft ist. Dies erleichtert das Aufstecken und führt gleichzeitig zu einer hohen Sicherheit gegen ungewolltes Lösen.

Aufgrund der beschriebenen Ausgestaltung des Verbindergegenstückes 6 ist der Steckabschnitt 8 des Verbinderstückes 2 als entsprechend muffenartige Aufnahme 36 für das Einsteckteil 22 des Verbindergegenstückes 6 ausgebildet. An den Steckabschnitt 8 bzw. die Aufnahme 36 schließen sich die Federarme 12 einstückig an. Bevorzugt sind mehrere, beispielsweise vier Federarme 12 in einer radialsymmetrischen Umfangsverteilung und jeweils über axial und radial durchgehende Schlitze 38 voneinander getrennt vorgesehen.

Das Sicherungselement 4 ist mit einer ringförmigen Ausgestaltung koaxial und axial verschiebbar sowie unverlierbar auf dem Verbinderstück 2 angeordnet. Dabei weist das Sicherungselement 4 einen in Umfangsrichtung geschlossen Speringabschnitt 40 auf, der in der Sicherungsstellung (Fig. 6) die Federarme 12 in deren die radial nach innen weisenden Rastansätze 14 aufweisenden Endbereichen mit nur geringem Radialspiel, also im Wesentlichen spielfrei, umschließt.

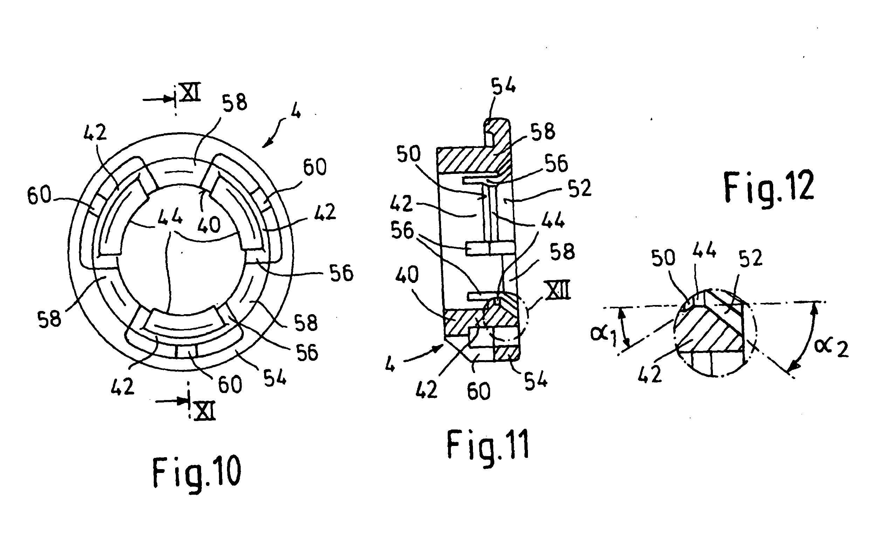

Die Rastmittel 18 bestehen aus mindestens zwei, im dargestellten Ausführungsbeispiel (siehe dazu insbesondere Fig. 2) drei radialelastischen Sicherungsrastarmen 42 des Sicherungsetementes 4 und aus mit Rastelementen 44 der Sicherungsrastarme 42 zusammenwirkenden Raststufen 46, 48 des Verbinderstückes 2. Die Rastelemente 44 der Sicherungsrastarme 42 sind als radial nach innen weisende, nasenartige Ansätze ausgebildet, die in der Ausgangsstellung gemäß Fig. 4 und 5 über erste Rastflächen 50 (siehe insbesondere Fig. 12) mit einer ersten Raststufe 46 des Verbinderstückes 2 sowie in der Sicherungsstellung gemäß Fig. 6 über zweite Rastflächen 52 (Fig. 12) mit einer zweiten Raststufe 48 des Verbinderstückes 2 zusammenwirken. Hierbei ist es wesentlich, dass gemäß Fig. 12 die ersten und zweiten Rastflächen 50, 52 der Rastelemente 44 der Sicherungsrastarme 42 jeweils als konusartige Schrägflächen ausgebildet sind, die mit der Steckachse einen ersten spitzen Winkel α₁ bzw. einen zweiten spitzen Winkel α₂ einschließen, wobei der erste Winkel α₁ der ersten Rastflächen 50 kleiner als der zweite Winkel α₂ der zweiten Rastflächen 52 ist. Daraus resultiert das Merkmal, dass die Verschlusskraft F1 kleiner als die Öffnungskraft F2 ist. Bei dem dargestellten, bevorzugten Ausführungsbeispiel beträgt α₁ etwa 30° und α₂ etwa 40°. Die Sicherungsrastarme 42 schließen sich einstückig an den Sperrringabschnitt 40 an und erstrecken sich axial in Löserichtung, d. h. entgegen der Steckrichtung. Somit sind die Rastmittel (Sicherungsrastarme 42 mit ihren Rastelementen 44) axial zu dem Speringabschnitt 40 versetzt angeordnet, so dass die Sicherungsfunktion von der Rastfunktion getrennt (entkoppelt) ist. Vorteilhafterweise besitzt das Sicherungselement 4 zudem einen manuell greifbaren Betätigungsabschnitt 54, der derart unabhängig von den Sicherungsrastarmen 42 direkt mit dem Speringabschnitt 40 verbunden ist, dass eine manuelle Betätigung ohne Beeinträchtigung der elastischen Beweglichkeit der Sicherungsrastarme 42 möglich ist. Dazu ist der Betätigungsabschnitt 54 mit dem Sperrringabschnitt 40 einstückig über jeweils in Umfangsrichtung zwischen den Sicherungsrastarmen 42 angeordnete und über Schlitze 56 beabstandete Verbindungsstege 58 verbunden. Es ist hierbei zweckmäßig, wenn der Betätigungsabschnitt 54 als umfangsgemäß durchgehender Ring ausgebildet ist, der die Sicherungsrastarme 42 koaxial mit radialem Abstand umschließt (siehe insbesondere Fig. 2 und 10). Durch diese koaxiale Anordnung, wobei der ringförmige Betätigungsabschnitt 56 in axialer Richtung etwa im Bereich der Rastelemente 44 liegt, ergibt sich eine vorteilhaft kutze Baulänge des gesamten Sicherungselementes 4.

In einer weiteren bevorzugten Ausgestaltung ist der ringförmige Betätigungsabschnitt 54 in seinen den Sicherungsrastarmen 42 jeweils radial gegenüberliegenden Umfangsbereichen über zusätzliche stegartige Verbindungsabschnitte 60 direkt, d. h. von den Sicherungsrastarmen 42 unabhängig, mit dem Sperrringabschnitt 40 verbunden. Durch diese Verbindungsabschnitte 60 wird eine Versteifung der sich jeweils in Umfangsrichtung frei über die Bereiche der Sicherungsrastarme 42 erstreckenden Ringabschnitte erreicht.

Die oben beschriebenen Ansätze 20 der Federarme 12 sind bevorzugt als Ringstegabschnitte ausgebildet und in Steckrichtung gesehen unmittelbar vor der zweiten Raststufe 48 angeordnet. Diese Raststufe 48 ist als eine Flankenfläche einer ringnutförmigen Vertiefung 61 gebildet.

Es ist weiterhin zweckmäßig, wenn die Federarme 12 des Verbinderstückes 2 an ihren freien Enden radial nach außen vorstehende Ansätze 62 als Endanschläge für das Sicherungselement 4 zur unverlierbaren, aber dennoch unter elastischer Verformung der Federarme 12 montierbaren und demontierbaren Halterung aufweisen. Für die Montage des Sicherungselementes 4 durch axiales Aufsetzen ist es vorteilhaft, wenn die Federarme 12 endseitige Schrägflächen 63 aufweisen, die beim Aufsetzen des Sicherungselementes 4 eine dazu erforderliche Bewegung der Federarme 12 radial nach innen bewirken.

Das Verbinderstück 2 weist im Übrigen im Anschluß an den Steckabschnitt 8 mindestens einen Anschlußstutzen 64 für eine Medienleitung (Schlauch- oder Rohrleitung für ein beliebiges hydraulisches oder pneumatisches Druck- und/oder Strömungsmedium, wie z. B. Kraftstoff) auf. Bei der dargestellten Ausführungsform handelt es sich um einen T-Verbinder mit zwei koaxialen, in entgegengesetze Richtungen weisenden Anschlußstutzen 64, von denen der Steckabschnitt 8 mit den Federarmen 12 rechtwinklig abzweigt Es ist jedoch auch eine Ausführung mit nur einem Anschlußstutzen 64 möglich, beispielsweise als Winkelverbinder mit einem bestimmten Winkel von z. B. 90° zwischen Steckabschnitt und Anschlußstutzen oder mit einem koaxial in die der Steckrichtung entgegengesetzte Richtung weisenden Anschlußstutzen.

Das Verbinderstück 2 ist mit seinen beschriebenen Teilen bevorzugt als einstückiges Formteil aus Kunststoff ausgebildet. Entsprechendes gilt auch für das Sicherungselement 4. Das Verbindergegenstück 6 kann aus einem beliebigen Material bestehen, beispielsweise aus einem Kunststoff oder Metall.

## Patentansprüche (Patentansprüche für folgende(n) Vertragsstaat(en): DE, FR, GB, IT)

1. Steckbarer und verrastbarer Leitungsverbinder (1) zum Anschluß mindestens einer Medienleitung, insbesondere Kraftstoffleitung, an ein Verbindergegenstück (6), bestehend aus einem Verbinderstück (2) mit einem Steckabschnitt (8), der mit einem komplementären Steckabschnitt (10) des Verbindergegenstückes (6) mediendicht zusammensteckbar ist, und mit mindestens einem, insbesondere mindestens zwei sich in Steckrichtung erstreckenden, radialelastischen Federarmen (12), die an ihren freien Enden Rastansätze (14) zum rastenden Hintergreifen einer Raststufe (16) des Verbindergegenstückes (6) in der zusammengesteckten Stellung aufweisen, sowie mit einem in axialer Richtung zwischen einer die Federarme (12) für eine radiale Rastbewegung freigebenden Ausgangsstellung (Fig. 4, 5) und einer die Federarme (12) zur Sicherung gegen ihre Rastbewegung umschließenden Sicherungsstellung (Fig. 6) bewegbaren Sicherungselement (4), wobei das Sicherungselement (4) in der Sicherungsstellung über Rastmittel (18) fixiert ist, wobei das Sicherungselement (4) mit einer ring- oder hülsenförmigen Ausgestaltung koaxial und verschiebbar auf dem Verbinderstück (2) angeordnet ist und das Sicherungselement (4) einen in Umfangsrichtung geschlossenen Sperrringabschnitt (40) aufweist, der in der Sicherungsstellung die Federarme (12) in deren die radial nach innen weisenden Rastansätze (14) aufweisenden Endbereichen mit geringem Radialspiel umschließt,
**dadurch gekennzeichnet, dass** das Sicherungselement (4) derart ausgebildet ist, dass eine Trennung von Sicherungsfunktion und Rastfunktion erreicht wird, wozu die Rastmittel (18) aus mindestens einem, insbesondere mindestens zwei radialelastischen Sicherungsrastarmen (42) des Sicherungselementes (4) und aus mit Rastelemente (44) der Sicherungsrastarme (42) zusammenwirkenden Raststufen (46, 48) des Verbinderstückes (2) bestehen und der Sperrringabschnitt (40) und die Sicherungsrastarme (42) in axialer Richtung versetzt angeordnet sind.

2. Leitungsverbinder nach Anspruch 1,
**dadurch gekennzeichnet, dass** das Sicherungselement (4) auch in der Ausgangsstellung über die Rastmittel (18) fixiert ist, wobei die Rastmittel (18) derart ausgebildet sind, dass eine zur Bewegung des Sicherungselementes (4) aus der Ausgangsstellung in die Sicherungsstellung aufzubringende Verschlußkraft (F1) kleiner ist als eine zur umgekehrten Bewegung aus der Sicherungsstellung in Richtung der Ausgangsstellung aufzubringende Öffnungskraft (F2).

3. Leitungsverbinder nach Anspruch 1 oder 2 ,
**dadurch gekennzeichnet, dass** das Sicherungselement (4) mit den Rastmitteln (18) sowie die Federarme (12) mit ihren Rastansätzen (14) in Anpassung an das Verbindergegenstück (6) derart ausgebildet sind, dass das Sicherungselement (4) als manueller Handhabungsangriff zum Stecken der Verbindung verwendbar ist, wobei durch Beaufschlagung des Sicherungselementes (4) mit einer in Steckrichtung wirkenden Steckkaft (F) zuerst die Steckabschnitte (8, 10) bis in die verrastete Stellung der Federarme (12) zusammensteckbar sind und erst dann das Sicherungselement (4) bis in die Sicherungsstellung bewegbar ist.

4. Leitungsverbinder nach einem der Ansprüche 1 bis 3,
**dadurch gekennzeichnet, dass** die Rastmittel (18) und die Federarme (12) mit den Rastansätzen (14) in Anpassung an das Verbindergegenstück (6) so ausgebildet sind, dass die zur Bewegung des Sicherungselementes (4) aus der Ausgangsstellung in die Sicherungsstellung aufzubringende Verschlußkraft (F1) größer als die zum Zusammenstecken der Steckabschnitte (8, 10) bis in ihre verrastete Stellung aufzubringende Steckkraft (F) ist.

5. Leitungsverbinder nach einem der Ansprüche 1 bis 4,
**dadurch gekennzeichnet, dass** das Verbinderstück (2) im zusammenwirkenden bereich der Federarme (12) und des Sicherungselementes (4) derart ausgebildet ist, dass die Verschlußkraft (F1) während des Steckvorgangs zeitweise durch radiales Spreizen der Federarme (12) des Verbinderstückes (2) erhöht wird, wobei vorzugsweise am äußeren Umfang der Federarme (12) radial vorstehende Ansätze (20) angeordnet sind.

6. Leitungsverbinder nach einem der Ansprüche 1 bis 5,
**dadurch gekennzeichnet, dass** der Steckabschnitt (8) des Verbinderstückes (2) als muffenartige Aufnahme (36) für den als Einsteckteil (22) ausgebildeten Steckabschnitt (10) des Verbindergegenstückes (6) ausgebildet ist.

7. Leitungsverbinder nach einem der Ansprüche 1 bis 6,
**dadurch gekennzeichnet, dass** der Steckabschnitt (8) einstückig in die Federarme (12) übergeht.

8. Leitungsverbinder nach einem der Ansprüche 1 bis 7,
**dadurch gekennzeichnet, dass** mehrere, vorzugsweise vier Federarme (12) in einer radialsymmetrischen Umfangsverteilung und jeweils über axiale und radiale Schlitze (38) voneinander getrennt vorgesehen sind.

9. Leitungsverbinder nach einem der Ansprüche 1 bis 8,
**dadurch gekennzeichnet, dass** dieRastelemente(44)der Sicherungsrastarme (42) als radial nach innen weisende Ansätze ausgebildet sind, die in der Ausgangsstellung über erste Rastflächen (50) mit einer ersten Raststufe (46) des Verbinderstückes (2) sowie in der Sicherungsstellung über zweite Rastflächen (52) mit einer zweiten Raststufe (48) des Verbinderstückes (2) zusammenwirken.

10. Leitungsverbinder nach Anspruch 9,
**dadurch gekennzeichnet, dass** die ersten und zweiten Rastflächen (50, 52) der Rastelemente (44) der Sicherungsrastarme (42) jeweils als konusartige Schrägfläche ausgebildet sind, die mit der Steckachse einen ersten bzw. zweiten spitzen Winkel (α₁ / α₂) einschließen, wobei der erste Winkel (α₁) der ersten Rastflächen (50) kleiner als der zweite Winkel (α₂) der zweiten Rastflächen (52) ist.

11. Leitungsverbinder nach einem der Ansprüche 1 bis 10,
**dadurch gekennzeichnet, dass** die Sicherungsrastarme (42) einstückig von dem Sperrringabschnitt (40) ausgehen und sich axial in Löserichtung erstrecken.

12. Leitungsverbinder nach einem der Ansprüche 1 bis 11,
**dadurch gekennzeichnet, dass** das Sicherungselement (4) einen Betätigungsabschnitt (54) aufweist, der derart mit dem Sperrringabschnitt (40) verbunden ist, dass mittels des Betätigungsabschnittes (54) eine manuelle Betätigung des Sicherungselementes (4) ohne Beeinträchtigung der elastischen Beweglichkeit der Sicherungsrastarme (42) möglich ist.

13. Leitungsverbinder nach Anspruch 12,
**dadurch gekennzeichnet, dass** der Betätigungsabschnitt (54) unabhängig von den Sicherungsrastarmen (42) mit dem Sperringabschnitt (40) verbunden ist, und zwar insbesondere über jeweils zwischen den Sicherungsrastarmen (42) angeordnete Verbindungsstege (58).

14. Leitungsverbinder nach Anspruch 12 oder 13,
**dadurch gekennzeichnet, dass** der Bestätigungsabschnitt (56) als durchgehender Ring ausgebildet ist, der die Sicherungsrastarme (42) koaxial mit radialem Abstand umschließt.

15. Leitungsverbinder nach Anspruch 14,
**dadurch gekennzeichnet, dass** der als Ring ausgebildete Betätigungsabschnitt (54) in seinen den Sicherungsrastarmen (42) jeweils radial gegenüberliegenden Umfangsbereichen über zusätzliche Verbindungsabschnitte (60) direkt mit dem Sperrringabschnitt (40) verbunden ist.

16. Leitungsverbinder nach einem der Ansprüche 1 bis 15,
**dadurch gekennzeichnet, dass** die Federarme (12) des Verbinderstückes (2) an ihren freien Enden radial nach außen vorstehende Ansätze (62) als Endanschläge für das Sicherungselement (4) aufweisen.

17. Leitungsverbinder nach einem der Ansprüche 1 bis 16,
**dadurch gekenntzeichnet, dass** das Verbinderstück (2) im Anschluß an den Steckabschnitt (8) mindestens einen Anschlußstutzen (64) für eine Medienleitung aufweist.

18. Leitungsverbinder nach einem der Ansprüche 5 bis 17,
**dadurch gekennzeichnet, dass** das Einsteckteil (22) des Verbindergegenstückes (6) an seinem freien Ende einen Dichtabschnitt (24) mit einem in einer Ringnut (26) sitzenden Dichtring (28) aufweist.

19. Leitungsverbinder nach Anspruch 18,
**dadurch gekennzeichnet, dass** sich an den Dichtabschnitt (24) ein über eine Konusfläche (30) im Querschnitt erweiterter Bereich (32) anschließt, der über die Raststufe (16) in einen verjüngten Bereich (34) übergeht.

20. Leitungsverbinder nach Anspruch 19,
**dadurch gekennzeichnet, dass** die beim Steckvorgang zum radialen Spreizen der Federarme (12) des Verbinderstückes (2) vorgesehene Konusfläche (30) mit der Steckachse einen relativ flachen Winkel (β₁) einschließt, der insbesondere im Bereich von 20° liegt.

21. Leitungsverbinder nach Anspruch 19 oder 20,
**dadurch gekennzeichnet, dass** dieRaststufe(16)alskonische Schrägfläche mit einem relativ steileren Winkel (β₂) zur Steckachse von insbesondere etwa 50° ausgebildet ist.

## Patentansprüche (Patentansprüche für folgende(n) Vertragsstaat(en): DE, FR, GB, IT)

1. Steckbarer und verrastbarer Leitungsverbinder (1) zum Anschluß mindestens einer Mediehleitung, insbesondere Kraftstoffleitung, an ein Verbindergegenstück (6), bestehend aus einem Verbinderstück (2) mit einem Steckabschnitt (8), der mit einem komplementären Steckabschnitt (10) des Verbindergegenstückes (6) mediendicht zusammensteckbar ist, und mit mindestens einem, insbesondere mindestens zwei sich in Steckrichtung erstreckenden, radialelastischen Federarmen (12), die an ihren freien Enden Rastansätze (14) zum rastenden Hintergreifen einer Raststufe (16) des Verbindergegenstückes (6) in der zusammengesteckten Stellung aufweisen, sowie mit einem in axialer Richtung zwischen einer die Federarme (12) für eine radiale Rastbewegung freigebenden Ausgangsstellung (Fig. 4, 5) und einer die Federarme (12) zur Sicherung gegen ihre Rastbewegung umschließenden Sicherungsstellung (Fig. 6) bewegbaren Sicherungselement (4), wobei das Sicherungselement (4) in der Sicherungsstellung über Rastmittel (18) fixiert ist, wobei das Sicherungselement (4) mit einer ring- oder hülsenförmigen Ausgestaltung koaxial und verschiebbar auf dem Verbinderstück (2) angeordnet ist und das Sicherungselement (4) einen in Umfangsrichtung geschlossenen Sperrringabschnitt (40) aufweist, der in der Sicherungsstellung die Federarme (12) in deren die radial nach innen weisenden Rastansätze (14) aufweisenden Endbereichen mit geringem Radialspiel umschließt,
**dadurch gekenntzeichnet, dass** das Sicherungselement (4) derart ausgebildet ist, dass eine Trennung von Sicherungsfunktion und Rastfunktion erreicht wird, wozu die Rastmittel (18) aus mindestens einem, insbesondere mindestens zwei radialelastischen Sicherungsrastarmen (42) des Sicherungselementes (4) und aus mit Rastelementen (44) der Sicherungsrastarme (42) zusammenwirkenden Raststufen (46, 48) des Verbinderstückes (2) bestehen und der Sperrringabschnitt (40) und die Sicherungsrastarme (42) in axialer Richtung versetzt angeordnet sind, und dass
das Sicherungselement (4) auch in der Ausgangsstellung über die Rastmittel (18) fixiert ist, wobei die Rastmittel (18) derart ausgebildet sind, dass eine zur Bewegung des Sicherungselementes (4) aus der Ausgangsstellung in die Sicherungsstellung aufzubringende Verschlußkraft (F1) kleiner ist als eine zur umgekehrten Bewegung aus der Sicherungsstellung in Richtung der Ausgangsstellung aufzubringende Öffnungskraft (F2).

2. Leitungsverbinder nach Anspruch 1,
**dadurch gekennzeichnet, dass** das Sicherungselement (4) mit den Rastmitteln (18) sowie die Federarme (12) mit ihren Rastansätzen (14) in Anpassung an das Verbindergegenstück (6) derart ausgebildet sind, dass das Sicherungselement (4) als manueller Handhabungsangriff zum Stecken der Verbindung verwendbar ist, wobei durch Beaufschlagung des Sicherungselementes (4) mit einer in Steckrichtung wirkenden Steckkaft (F) zuerst die Steckabschnitte (8, 10) bis in die verrastete Stellung der Federarme (12) zusammensteckbar sind und erst dann das Sicherungselement (4) bis in die Sicherungsstellung bewegbar ist.

3. Leitungsverbinder nach Anspruch 1 oder 2,
**dadurch gekennzeichnet, dass** die Rastmittel (18) und die Federarme (12) mit den Rastansätzen (14) in Anpassung an das Verbindergegenstück (6) so ausgebildet sind, dass die zur Bewegung des Sicherungselementes (4) aus der Ausgangsstellung in die Sicherungsstellung aufzubringende Verschlußkraft (F1) größer als die zum Zusammenstecken der Steckabschnitte (8, 10) bis in ihre verrastete Stellung aufzubringende Steckkraft (F) ist.

4. Leitungsverbinder nach einem der Ansprüche 1 bis 3,
**dadurch gekennzeichnet, dass** das Verbinderstück (2) im zusammenwirkenden bereich der Federarme (12) und des Sicherungselementes (4) derart ausgebildet ist, dass die Verschlußkraft (F1) während des Steckvorgangs zeitweise durch radiales Spreizen der Federarme (12) des Verbinderstückes (2) erhöht wird, wobei vorzugsweise am äußeren Umfang der Federarme (12) radial vorstehende Ansätze (20) angeordnet sind.

5. Leitungsverbinder nach einem der Ansprüche 1 bis 4,
**dadurch gekennzeichet, dass** der Steckabschnitt (8) des Verbinderstückes (2) als muffenartige Aufnahme (36) für den als Einsteckteil (22) ausgebildeten Steckabschnitt (10) des Verbindergegenstückes (6) ausgebildet ist.

6. Leitungsverbinder nach einem der Ansprüche 1 bis 5,
**dadurch gekennzeichnet, dass** der Steckabschnitt (8) einstückig in die Federarme (12) übergeht.

7. Leitungsverbinder nach einem der Ansprüche 1 bis 6,
**dadurch gekennzeichnet, dass** mehrere, vorzugsweise vier Federarme (12) in einer radialsymmetrischen Umfangsverteilung und jeweils über axiale und radiale Schlitze (38) voneinander getrennt vorgesehen sind.

8. Leitungsverbinder nach einem der Ansprüche 1 bis 7,
**dadurch gekennzeichnet, dass** dieRastelemente(44)der Sicherungsrastarme (42) als radial nach innen weisende Ansätze ausgebildet sind, die in der Ausgangsstellung über erste Rastflächen (50) mit einer ersten Raststufe (46) des Verbinderstückes (2) sowie in der Sicherungsstellung über zweite Rastflächen (52) mit einer zweiten Raststufe (48) des Verbinderstückes (2) zusammenwirken.

9. Leitungsverbinder nach Anspruch 8,
**dadurch gekennzeichnet, dass** die ersten und zweiten Rastflächen (50, 52) der Rastelemente (44) der Sicherungsrastarme (42) jeweils als konusartige Schrägfläche ausgebildet sind, die mit der Steckachse einen ersten bzw. zweiten spitzen Winkel (α₁/ α₂) einschließen, wobei der erste winkel (α₁) der ersten Rastflächen (50) kleiner als der zweite Winkel (α₂) der zweiten Rastflächen (52) ist.

10. Leitungsverbinder nach einem der Ansprüche 1 bis 9,
**dadurch gekehnzeichnet, dass** die Sicherungsrastarme (42) einstückig von dem Sperrringabschnitt (40) ausgehen und sich axial in Löserichtung erstrecken.

11. Leitungsverbinder nach einem der Ansprüche 1 bis 10,
**dadurch gekennzeichnet, dass** das Sicherungselement (4) einen Betätigungsabschnitt (54) aufweist, der derart mit dem Sperrringabschnitt (40) verbunden ist, dass mittels des Betätigungsabschnittes (54) eine manuelle Betätigung des Sicherungselementes (4) ohne Beeinträchtigung der elastischen Beweglichkeit der Sicherungsrastarme (42) möglich ist.

12. Leitungsverbinder nach Anspruch 11,
**dadurch gekenntzeichnet, dass** der Betätigungsabschnitt (54) unabhängig von den Sicherungsrastarmen (42) mit dem Sperringabschnitt (40) verbunden ist, und zwar insbesondere über jeweils zwischen den Sicherungsrastarmen (42) angeordnete Verbindungsstege (58).

13. Leitungsverbinder nach Anspruch 11 oder 12,
**dadurch gekennzeichnet, dass** der Bestätigungsabschnitt (56) als durchgehender Ring ausgebildet ist, der die Sicherungsrastarme (42) koaxial mit radialem Abstand umschließt.

14. Leitungsverbinder nach Anspruch 13,
**dadurch gekennzeichnet, dass** der als Ring ausgebildete Betätigungsabschnitt (54) in seinen den Sicherungsrastarmen (42) jeweils radial gegenüberliegenden Umfangsbereichen über zusätzliche Verbindungsabschnitte (60) direkt mit dem Sperrringabschnitt (40) verbunden ist.

15. Leitungsverbinder nach einem der Ansprüche 1 bis 14,
**dadurch gekennzeichnet, dass** die Federarme (12) des Verbinderstückes (2) an ihren freien Enden radiale nach außen vorstehende Ansätze (62) als Endanschläge für das Sicherungselement (4) aufweisen.

16. Leitungsverbinder nach einem der Ansprüche 1 bis 15,
**dadurch gekennzeichnet, dass** das Verbinderstück (2) im Anschluß an den Steckabschnitt (8) mindestens einen Anschlußstutzen (64) für eine Medienleitung aufweist.

17. Leitungsverbinder nach einem der Ansprüche 4 bis 16,
**dadurch gekennzeichnet, dass** das Einsteckteil (22) des Verbindergegenstückes (6) an seinem freien Ende einen Dichtabschnitt (24) mit einem in einer Ringnut (26) sitzenden Dichtring (28) aufweist.

18. Leitungsverbinder nach Anspruch 17,
**dadurch gekennzeichnet, dass** sich an den Dichtabschnitt (24) ein über eine Konusfläche (30) im Querschnitt erweiterter Bereich (32) anschließt, der über die Raststufe (16) in einen verjüngten Bereich (34) übergeht.

19. Leitungsverbinder nach Anspruch 18,
**dadurch gekennzeichnet, dass** die beim Steckvorgang zum radialen Spreizen der Federarme (12) des Verbinderstückes (2) vorgesehene Konusfläche (30) mit der Steckachse einen relativ flachen Winkel (β₁) einschließt, der insbesondere im Bereich von 20° liegt.

20. Leitungsverbinder nach Anspruch 18 oder 19,
**dadurch gekennzeichnet, dass** dieRaststufe(16)alskonische Schrägfläche mit einem relativ steileren Winkel (β₂) zur Steckachse von insbesondere etwa 50° ausgebildet ist.

## Claims

1. A plug-in and latchable line connector (1) for connecting at least one media line, in particular fuel line, to a connector counter-piece (6), consisting of a connector piece (2) with a connection section (8), which can be assembled in a media-tight manner with a complementary connection section (10) of the connector counter-piece (6), and with at least one, in particular at least two, radially elastic spring arms (12) extending in the direction of connection, which have at their free ends latch projections (14) for engaging in a latching manner behind a latch step (16) of the connector counter-piece (6) in the assembled position, and also with a securing element (4) movable in the axial direction between a starting position (Fig. 4, 5) which releases the spring arms (12) for a radial latching movement and a securing position (Fig. 6) which surrounds the spring arms (12) for securing against their latching movement, the securing element (4) being fastened in the securing position by latch means (18), the securing element (4) with an annular or sleeve-shaped configuration being arranged coaxially and displaceably on the connector piece (2) and the securing element (4) having a blocking ring section (40) which is closed in the peripheral direction, which ring section in the securing position surrounds the spring arms (12) in their end regions having the radially inward-facing latch projections (14) with slight radial play,
**characterised in that** the securing element (4) is designed such that separation of the securing function and latching function is achieved, for which purpose the latch means (18) consist of at least one, in particular at least two, radially elastic securing latch arms (42) of the securing element (4) and of latch steps (46, 48) of the connector piece (2) which cooperate with latch elements (44) of the securing latch arms (42) and the blocking ring section (40) and the securing latch arms (42) are arranged offset in the axial direction.

2. A line connector according to Claim 1,
**characterised in that** the securing element (4) is fastened via the latch means (18) in the starting position as well, the latch means (18) being designed such that a closing force (F1) to be applied for moving the securing element (4) out of the starting position into the securing position is smaller than an opening force (F2) to be applied for the reverse moving out of the securing position towards the starting position.

3. A line connector according to Claim 1 or 2,
**characterised in that** the securing element (4) with the latch means (18) and also the spring arms (12) with their latch projections (14) are designed in adaptation to the connector counter-piece (6) such that the securing element (4) can be used as a manual manipulating handle for plugging in the connection, with first the connection sections (8, 10) being able to be assembled into the latched position of the spring arms (12) and only then the securing element (4) being able to be moved into the securing position by acting on the securing element (4) with a connection force (F) which acts in the direction of connection.

4. A line connector according to one of Claims 1 to 3,
**characterised in that** the latch means (18) and the spring arms (12) with the latch projections (14) are designed in adaptation to the connector counter-piece (6) such that the closing force (F1) to be applied for moving the securing element (4) from the starting position into the securing position is greater than the connection force (F) to be applied for assembling the connection sections (8, 10) into their latched position.

5. A line connector according to one of Claims 1 to 4,
**characterised in that** the connector piece (2), in the cooperating region of the spring arms (12) and the securing element (4), is designed such that the closing force (F1) during the connection operation is temporarily increased by radial spreading of the spring arms (12) of the connector piece (2), with radially protruding projections (20), preferably, being arranged on the outer periphery of the spring arms (12).

6. A line connector according to one of Claims 1 to 5,
**characterised in that** the connection section (8) of the connector piece (2) is designed as a bushing-like receptacle (36) for the connection section (10), designed as an insertion part (22), of the connector counter-piece (6).

7. A line connector according to one of Claims 1 to 6,
**characterised in that** the connection section (8) merges in one piece into the spring arms (12).

8. A line connector according to one of Claims 1 to 7,
**characterised in that** a plurality of, preferably four, spring arms (12) are provided in a radially symmetrical peripheral distribution and each separated from each other via axial and radial slots (38).

9. A line connector according to one of Claims 1 to 8,
**characterised in that** the latch elements (44) of the securing latch arms (42) are designed as radially inward-facing projections, which in the starting position cooperate via first latch surfaces (50) with a first latch step (46) of the connector piece (2) and also in the securing position via second latch surfaces (52) with a second latch step (48) of the connector piece (2).

10. A line connector according to Claim 9,
**characterised in that** the first and second latch surfaces (50, 52) of the latch elements (44) of the securing latch arms (42) are each designed as a cone-like inclined surface, which latch surfaces enclose with the axis of connection a first and second acute angle respectively, the first angle of the first latch surfaces (50) being smaller than the second angle of the second latch surfaces (52).

11. A line connector according to one of Claims 1 to 10,
**characterised in that** the securing latch arms (42) depart in one piece from the blocking ring section (40) and extend axially in the direction of detachment.

12. A line connector according to one of Claims 1 to 11,
**characterised in that** the securing element (4) has an actuating section (54) which is connected to the blocking ring section (40) such that manual actuation of the securing element (4) without adversely affecting the elastic movability of the securing latch arms (42) is possible by means of the actuating section (54).

13. A line connector according to Claim 12,
**characterised in that** the actuating section (54) independently of the securing latch arms (42) is connected to the blocking ring section (40), namely in particular via connecting webs (58) arranged in each case between the securing latch arms (42).

14. A line connector according to Claim 12 or 13,
**characterised in that** the confirmation section [sic] (56) [sic] is designed as a continuous ring which surrounds the securing latch arms (42) coaxially at a radial distance.

15. A line connector according to Claim 14,
**characterised in that** the actuating section (54) designed as a ring, in its peripheral regions radially opposite the securing latch arms (42) in each case, is connected directly to the blocking ring section (40) via additional connecting sections (60).

16. A line connector according to one of Claims 1 to 15,
**characterised in that** the spring arms (12) of the connector piece (2) have at their free ends radially outward-protruding projections (62) as end stops for the securing element (4).

17. A line connector according to one of Claims 1 to 16,
**characterised in that** the connector piece (2) adjoining the connection section (8) has at least one connecting branch (64) for a media line.

18. A line connector according to one of Claims 5 to 17,
**characterised in that** the insertion part (22) of the connector counter-piece (6) has at its free end a sealing section (24) with a sealing ring (28) seated in an annular groove (26).

19. A line connector according to Claim 18,
**characterised in that** the sealing section (24) is adjoined by a region (32) which is widened in cross-section by means of a conical surface (30), which region merges via the latch step (16) into a tapered region (34).

20. A line connector according to Claim 19,
**characterised in that** the conical surface (30) intended for radially spreading the spring arms (12) of the connector piece (2) in the connection operation encloses with the axis of connection a relatively small angle which is in particular in the region of 20°.

21. A line connector according to Claim 19 or 20,
**characterised in that** the latch step (16) is designed as a conical inclined surface with a relatively steeper angle to the axis of connection of in particular about 50°.

## Claims (Claims for the following Contracting State(s): DE, FR, GB, IT)

1. A plug-in and latchable line connector (1) for connecting at least one media line, in particular fuel line, to a connector counter-piece (6), consisting of a connector piece (2) with a connection section (8), which can be assembled in a media-tight manner with a complementary connection section (10) of the connector counter-piece (6), and with at least one, in particular at least two, radially elastic spring arms (12) extending in the direction of connection, which have at their free ends latch projections (14) for engaging in a latching manner behind a latch step (16) of the connector counter-piece (6) in the assembled position, and also with a securing element (4) movable in the axial direction between a starting position (Fig. 4, 5) which releases the spring arms (12) for a radial latching movement and a securing position (Fig. 6) which surrounds the spring arms (12) for securing against their latching movement, the securing element (4) being fastened in the securing position by latch means (18), the securing element (4) with an annular or sleeve-shaped configuration being arranged coaxially and displaceably on the connector piece (2) and the securing element (4) having a blocking ring section (40) which is closed in the peripheral direction, which ring section in the securing position surrounds the spring arms (12) in their end regions having the radially inward-facing latch projections (14) with slight radial play,
**characterised in that** the securing element (4) is designed such that separation of the securing function and latching function is achieved, for which purpose the latch means (18) consist of at least one, in particular at least two, radially elastic securing latch arms (42) of the securing element (4) and of latch steps (46, 48) of the connector piece (2) which cooperate with latch elements (44) of the securing latch arms (42) and the blocking ring section (40) and the securing latch arms (42) are arranged offset in the axial direction,
and **in that** the securing element (4) is fastened via the latch means (18) in the starting position as well, the latch means (18) being designed such that a closing force (F1) to be applied for moving the securing element (4) out of the starting position into the securing position is smaller than an opening force (F2) to be applied for the reverse moving out of the securing position towards the starting position.

2. A line connector according to Claim 1,
**characterised in that** the securing element (4) with the latch means (18) and also the spring arms (12) with their latch projections (14) are designed in adaptation to the connector counter-piece (6) such that the securing element (4) can be used as a manual manipulating handle for plugging in the connection, with first the connection sections (8, 10) being able to be assembled into the latched position of the spring arms (12) and only then the securing element (4) being able to be moved into the securing position by acting on the securing element (4) with a connection force (F) which acts in the direction of connection.

3. A line connector according to Claim 1 or 2,
**characterised in that** the latch means (18) and the spring arms (12) with the latch projections (14) are designed in adaptation to the connector counter-piece (6) such that the closing force (F1) to be applied for moving the securing element (4) from the starting position into the securing position is greater than the connection force (F) to be applied for assembling the connection sections (8, 10) into their latched position.

4. A line connector according to one of Claims 1 to 3,
**characterised in that** the connector piece (2), in the cooperating region of the spring arms (12) and the securing element (4), is designed such that the closing force (F1) during the connection operation is temporarily increased by radial spreading of the spring arms (12) of the connector piece (2), with radially protruding projections (20), preferably, being arranged on the outer periphery of the spring arms (12).

5. A line connector according to one of Claims 1 to 4,
**characterised in that** the connection section (8) of the connector piece (2) is designed as a bushing-like receptacle (36) for the connection section (10), designed as an insertion part (22), of the connector counter-piece (6).

6. A line connector according to one of Claims 1 to 5,
**characterised in that** the connection section (8) merges in one piece into the spring arms (12).

7. A line connector according to one of Claims 1 to 6,
**characterised in that** a plurality of, preferably four, spring arms (12) are provided in a radially symmetrical peripheral distribution and each separated from each other via axial and radial slots (38).

8. A line connector according to one of Claims 1 to 7,
**characterised in that** the latch elements (44) of the securing latch arms (42) are designed as radially inward-facing projections, which in the starting position cooperate via first latch surfaces (50) with a first latch step (46) of the connector piece (2) and also in the securing position via second latch surfaces (52) with a second latch step (48) of the connector piece (2).

9. A line connector according to Claim 8,
**characterised in that** the first and second latch surfaces (50, 52) of the latch elements (44) of the securing latch arms (42) are each designed as a cone-like inclined surface, which latch surfaces enclose with the axis of connection a first and second acute angle respectively, the first angle of the first latch surfaces (50) being smaller than the second angle of the second latch surfaces (52).

10. A line connector according to one of Claims 1 to 9,
**characterised in that** the securing latch arms (42) depart in one piece from the blocking ring section (40) and extend axially in the direction of detachment.

11. A line connector according to one of Claims 1 to 10,
**characterised in that** the securing element (4) has an actuating section (54) which is connected to the blocking ring section (40) such that manual actuation of the securing element (4) without adversely affecting the elastic movability of the securing latch arms (42) is possible by means of the actuating section (54).

12. A line connector according to Claim 11,
**characterised in that** the actuating section (54) independently of the securing latch arms (42) is connected to the blocking ring section (40), namely in particular via connecting webs (58) arranged in each case between the securing latch arms (42).

13. A line connector according to Claim 11 or 12,
**characterised in that** the confirmation section [sic] (56) [sic] is designed as a continuous ring which surrounds the securing latch arms (42) coaxially at a radial distance.

14. A line connector according to Claim 13,
**characterised in that** the actuating section (54) designed as a ring, in its peripheral regions radially opposite the securing latch arms (42) in each case, is connected directly to the blocking ring section (40) via additional connecting sections (60).

15. A line connector according to one of Claims 1 to 14,
**characterised in that** the spring arms (12) of the connector piece (2) have at their free ends radially outward-protruding projections (62) as end stops for the securing element (4).

16. A line connector according to one of Claims 1 to 15,
**characterised in that** the connector piece (2) adjoining the connection section (8) has at least one connecting branch (64) for a media line.

17. A line connector according to one of Claims 4 to 16,
**characterised in that** the insertion part (22) of the connector counter-piece (6) has at its free end a sealing section (24) with a sealing ring (28) seated in an annular groove (26).

18. A line connector according to Claim 17,
**characterised in that** the sealing section (24) is adjoined by a region (32) which is widened in cross-section by means of a conical surface (30), which region merges via the latch step (16) into a tapered region (34).

19. A line connector according to Claim 18,
**characterised in that** the conical surface (30) intended for radially spreading the spring arms (12) of the connector piece (2) in the connection operation encloses with the axis of connection a relatively small angle which is in particular in the region of 20°. 20. A line connector according to Claim 18 or 19,
**characterised in that** the latch step (16) is designed as a conical inclined surface with a relatively steeper angle to the axis of connection of in particular about 50°.

## Revendications

1. Raccord de conduite emboîtable et encliquetable (1) pour raccorder au moins une conduite d'un milieu, en particulier une conduite de combustible, à une pièce de raccordement complémentaire (6), composé d'une pièce de raccordement (2) avec un tronçon d'emboîtement (8), qui peut être emboîté de façon étanche au milieu avec un tronçon d'emboîtement complémentaire (10) de la pièce de raccordement complémentaire (6), et avec au moins un, en particulier au moins deux bras de ressort (12) radialement élastiques, s'étendant dans la direction d'emboîtement et présentant au niveau de leurs extrémités libres des épaulements d'encliquetage (14) pour saisir par encliquetage à l'arrière un cran d'encliquetage (16) de la pièce de raccordement complémentaire (6) dans la position emboîtée, ainsi qu'avec un élément d'ancrage (4) mobile dans une direction axiale entre une position initiale (figure 4, 5) dans laquelle il libère les bras de ressort (12) pour un mouvement d'encliquetage radial et une position d'ancrage (figure 6) dans laquelle il entoure les bras de ressort (12) pour les ancrer contre leur mouvement d'encliquetage, raccord dans lequel l'élément d'ancrage (4) est fixé dans la position d'ancrage par l'intermédiaire de moyens d'encliquetage (18), dans lequel l'élément d'ancrage (4) qui présente une configuration en forme de bague ou de douille est disposé de façon coaxiale et mobile sur la pièce de raccordement (2), et dans lequel l'élément d'ancrage (4) présente un tronçon en forme de bague de blocage (40) fermé dans la direction circonférentielle et qui entoure dans la position d'ancrage avec un faible jeu radial les bras de ressort (12) dans leurs zones d'extrémité qui présentent des épaulements d'encliquetage (14) orientés radialement vers l'intérieur,
**caractérisé en ce que** l'élément d'ancrage (4) est réalisé de manière à obtenir une séparation de la fonction d'ancrage et de la fonction d'encliquetage, les moyens d'encliquetage (18) étant à cet effet composés d'au moins un, en particulier d'au moins deux bras d'encliquetage d'ancrage (42) radialement élastiques de l'élément d'ancrage (4) et de crans d'encliquetage (46, 48), coopérant avec des éléments d'encliquetage (44) des bras d'encliquetage d'ancrage (42), de la pièce de raccordement, et le tronçon formant bague de blocage (40) et les bras d'encliquetage d'ancrage (42) étant disposés de façon décalée dans la direction axiale.

2. Raccord de conduite selon la revendication 1, **caractérisé en ce que** l'élément d'ancrage (4) est fixé par les moyens d'encliquetage (18) également en position initiale, les moyens d'encliquetage (18) étant réalisés de telle sorte qu'une force de fermeture (F1) à exercer pour déplacer l'élément d'ancrage (4) de la position de départ à la position d'ancrage est inférieure à une force d'ouverture (F2) à exercer pour provoquer un déplacement inverse de la position d'ancrage en direction de la position initiale.

3. Raccord de conduite selon la revendication 1 ou 2, **caractérisé en ce que** l'élément d'ancrage (4) avec les moyens d'encliquetage (18) ainsi que les bras de ressort (12) avec leurs épaulements d'encliquetage (14) sont réalisés en adaptation à la pièce de raccordement complémentaire (6) de telle sorte que l'élément d'ancrage (4) est utilisable comme un point d'attaque de manipulation pour l'emboîtement du raccord, dans lequel la sollicitation de l'élément d'ancrage (4) par une force d'emboîtement (F) agissant dans la direction d'emboîtement permet d'abord d'emboîter les tronçons d'emboîtement (8, 10) ensemble jusqu'à la position encliquetée des bras de ressort (12), et seulement ensuite de déplacer l'élément d'ancrage (4) jusqu'à la position d'ancrage.

4. Raccord de conduite selon l'une quelconque des revendications 1 à 3, **caractérisé en ce que** les moyens d'encliquetage (18) et les bras de ressort (12) avec les épaulements d'encliquetage (14) sont réalisés en adaptation à la pièce de raccordement complémentaire (6) de telle sorte que la force de fermeture (F1) à développer pour déplacer l'élément d'ancrage (4) de la position initial à la position d'ancrage est supérieure à la force d'emboîtement (F) à développer pour emboîter les tronçons d'emboîtement (8, 10) ensemble jusqu'à leur position encliquetée.

5. Raccord de conduite selon l'une quelconque des revendications 1 à 4, **caractérisé en ce que** dans la zone de coopération des bras de ressort (12) et de l'élément d'ancrage (4) la pièce de raccordement (2)est réalisée de telle sorte que pendant l'opération d'emboîtement la force de fermeture (F1) est temporairement augmentée par l'écartement radial des bras de ressort (12) de la pièce de raccordement (2), dans lequel des épaulements (20) faisant saillie radialement sont disposés de préférence sur la circonférence extérieure des bras de ressort (12).

6. Raccord de conduite selon l'une quelconque des revendications 1 à 5, **caractérisé en ce que** le tronçon d'emboîtement (8) de la pièce de raccordement (2) est réalisé comme un logement (36) de type manchon pour le tronçon d'emboîtement (10) réalisé comme une pièce enfichable (22) de la pièce de raccordement complémentaire (6).

7. Raccord de conduite selon l'une quelconque des revendications 1 à 6, **caractérisé en ce que** le tronçon d'emboîtement (8) réalise une transition d'une seule pièce avec les bras de ressort (12).

8. Raccord de conduite selon l'une quelconque des revendications 1 à 7, **caractérisé en ce que** plusieurs, de préférence quatre bras de ressort (12) sont prévus dans une répartition circonférentielle à symétrie radiale et en étant séparés les uns des autres respectivement par des fentes axiales et radiales (38).

9. Raccord de conduite selon l'une quelconque des revendications 1 à 8, **caractérisé en ce que** les éléments d'encliquetage (44) des bras d'encliquetage d'ancrage (42) sont réalisés comme des épaulements tournés radialement vers l'intérieur qui coopèrent dans la position de départ par l'intermédiaire de premières surfaces d'encliquetage (50) avec un premier gradin d'encliquetage (46) de la pièce de raccordement (2) ainsi que dans la position d'ancrage par l'intermédiaire de deuxièmes surfaces d'encliquetage (52) avec un deuxième gradin d'encliquetage (48) de la pièce de raccordement (2).

10. Raccord de conduite selon la revendication 9, **caractérisé en ce que** les premières et deuxièmes surfaces d'encliquetage (50, 52) des éléments d'encliquetage (44) des bras d'encliquetage d'ancrage (42) sont respectivement réalisées comme une surface inclinée de type conique qui forment avec l'axe d'emboîtement un premier ou un deuxième angle aigu (α₁/α₂), le premier angle (α₁) des premières surfaces d'encliquetage (50) étant inférieur au deuxième angle (α₂) des deuxièmes surfaces d'encliquetage (52).

11. Raccord de conduite selon l'une quelconque des revendications 1 à 10, **caractérisé en ce que** les bras d'encliquetage d'ancrage (42) partent d'une seule pièce du tronçon formant bague de blocage (40) et s'étendent axialement dans la direction de détachement.

12. Raccord de conduite selon l'une quelconque des revendications 1 à 11, **caractérisé en ce que** l'élément d'ancrage (4) présente un tronçon d'actionnement (54) qui est relié au tronçon formant bague de blocage (40) de telle sorte qu'au moyen du tronçon d'actionnement (54), un actionnement manuel de l'élément d'ancrage (4) est possible sans affecter la mobilité élastique des bras d'encliquetage d'ancrage (42).

13. Raccord de conduite selon la revendication 12, **caractérisé en ce que** le tronçon d'actionnement (54) est relié indépendamment des bras d'encliquetage d'ancrage (42) au tronçon formant bague de blocage (40), et notamment par l'intermédiaire d'entretoises de raccordement (58) disposées respectivement entre les bras d'encliquetage d'ancrage (42).

14. Raccord de conduite selon la revendication 12 ou 13, **caractérisé en ce que** le tronçon d'actionnement (56) est réalisé comme une bague continue qui entoure les bras d'encliquetage d'ancrage (42) de façon coaxiale avec un espacement radial.

15. Raccord de conduite selon la revendication 14, **caractérisé en ce que** le tronçon d'actionnement (54) réalisé comme une bague est raccordé au niveau de ses zones circonférentielles, respectivement radialement opposées aux bras d'encliquetage d'ancrage (42), par l'intermédiaire de tronçons de raccordement (60) supplémentaires, directement au tronçon formant bague de blocage (40).

16. Raccord de conduite selon l'une quelconque des revendications 1 à 15, **caractérisé en ce que** les bras de ressort (12) de la pièce de raccordement (2) présentent au niveau de leurs extrémités libres des épaulements (62) faisant saillie radialement vers l'extérieur comme des butées d'extrémité pour l'élément d'ancrage (4).

17. Raccord de conduite selon l'une quelconque des revendications 1 à 16, **caractérisé en ce que**, à la suite du tronçon d'emboîtement (8), la pièce de raccordement (2) présente au moins un embout de raccordement (64) pour une conduite d'un milieu.

18. Raccord de conduite selon l'une quelconque des revendications 5 à 17, **caractérisé en ce que** la pièce enfichable (22) de la pièce de raccordement complémentaire (6) présente à son extrémité libre un tronçon d'étanchéité (24) avec une bague d'étanchéité (28) reposant sur un écrou annulaire (26).

19. Raccord de conduite selon la revendication 18, **caractérisé en ce que** le tronçon d'étanchéité (24) est suivi d'une zone (32) élargie en section transversale par l'intermédiaire d'une surface conique (30) et qui passe par l'intermédiaire du cran d'encliquetage (16) à une zone amincie (34).

20. Raccord de conduite selon la revendication 19, **caractérisé en ce que** la surface conique (30) prévue lors de l'opération d'emboîtement pour l'écartement radial des bras de ressort (12) de la pièce de raccordement (2) forme avec l'axe d'emboîtement un angle (β₁) relativement plat qui est en particulier de l'ordre de 20°.

21. Raccord de conduite selon la revendication 19 ou 20, **caractérisé en ce que** le gradin d'encliquetage (16) est réalisé comme une surface inclinée conique avec un angle (β₂) relativement plus raide par rapport à l'axe d'emboîtement, en particulier d'environ 50°.

## Revendications (Revendications pour l'(les) Etat(s) contractant(s) suivant(s): DE, FR, GB, IT)

1. Raccord de conduite emboîtable et encliquetable (1) pour raccorder au moins une conduite d'un milieu, en particulier une conduite de combustible, à une pièce de raccordement complémentaire (6), composé d'une pièce de raccordement (2) avec un tronçon d'emboîtement (8), qui peut être emboîté de façon étanche au milieu avec un tronçon d'emboîtement complémentaire (10) de la pièce de raccordement complémentaire (6), et avec au moins un, en particulier au moins deux bras de ressort (12) radialement élastiques, s'étendant dans la direction d'emboîtement et présentant au niveau de leurs extrémités livres des épaulements d'encliquetage (14) pour saisir par encliquetage à l'arrière un cran d'encliquetage (16) de la pièce de raccordement complémentaire (6) dans la position emboîtée, ainsi qu'avec un élément d'ancrage (4) mobile dans une direction axiale entre une position initiale (figure 4, 5) dans laquelle il libère les bras de ressort (12) pour un mouvement d'encliquetage radial et une position d'ancrage (figure 6) dans laquelle il entoure les bras de ressort (12) pour les ancrer contre leur mouvement d'encliquetage, raccord dans lequel l'élément d'ancrage (4) est fixé dans la position d'ancrage par l'intermédiaire de moyens d'encliquetage (18), dans lequel l'élément d'ancrage (4) qui présente une configuration en forme de bague ou de douille est disposé de façon coaxiale et mobile sur la pièce de raccordement (2), et dans lequel l'élément d'ancrage (4) présente un tronçon en forme de bague de blocage (40) fermé dans la direction circonférentielle et qui entoure dans la position d'ancrage avec un faible jeu radial les bras de ressort (12) dans leurs zones d'extrémité qui présentent des épaulements d'encliquetage (14) orientés radialement vers l'intérieur,
**caractérisé en ce que** l'élément d'ancrage (4) est réalisé de manière à obtenir une séparation de la fonction d'ancrage et de la fonction d'encliquetage, les moyens d'encliquetage (18) étant à cet-effet composés d'au moins un, en particulier d'au moins deux bras d'encliquetage d'ancrage (42) radialement élastiques de l'élément d'ancrage (4) et de crans d'encliquetage (46, 48), coopérant avec des éléments d'encliquetage (44) des bras d'encliquetage d'ancrage (42), de la pièce de raccordement, et le tronçon formant bague de blocage (40) et les bras d'encliquetage d'ancrage (42) étant disposés de façon décalée dans la direction axiale,
et **en ce que** l'élément d'ancrage (4) est fixé par les moyens d'encliquetage (18) également en position initiale, les moyens d'encliquetage (18) étant réalisés de telle sorte qu'une force de fermeture (F1) à exercer pour déplacer l'élément d'ancrage (4) de la position de départ à la position d'ancrage est inférieure à une force d'ouverture (F2) à exercer pour provoquer un déplacement inverse de la position d'ancrage en direction de la position initiale.

2. Raccord de conduite selon la revendication 1, **caractérisé en ce que** l'élément d'ancrage (4) avec les moyens d'encliquetage (18) ainsi que les bras de ressort (12) avec leurs épaulements d'encliquetage (14) sont réalisés en adaptation à la pièce de raccordement complémentaire (6) de telle sorte que l'élément d'ancrage (4) est utilisable comme un point d'attaque de manipulation pour l'emboîtement du raccord, dans lequel la sollicitation de l'élément d'ancrage (4) par une force d'emboîtement (F) agissant dans la direction d'emboîtement permet d'abord d'emboîter les tronçons d'emboîtement (8, 10) ensemble jusqu'à la position encliquetée des bras de ressort (12), et seulement ensuite de déplacer l'élément d'ancrage (4) jusqu'à la position d'ancrage.

3. Raccord de conduite selon la revendication 1 ou 2, **caractérisé en ce que** les moyens d'encliquetage (18) et les bras de ressort (12) avec les épaulements d'encliquetage (14) sont réalisés en adaptation à la pièce de raccordement complémentaire (6) de telle sorte que la force de fermeture (F1) à développer pour déplacer l'élément d'ancrage (4) de la position initial à la position d'ancrage est supérieure à la force d'emboîtement (F) à développer pour emboîter les tronçons d'emboîtement (8, 10) ensemble jusqu'à leur position encliquetée.

4. Raccord de conduite selon l'une quelconque des revendications 1 à 3, **caractérisé en ce que** dans la zone de coopération des bras de ressort (12) et de l'élément d'ancrage (4) la pièce de raccordement (2)est réalisée de telle sorte que pendant l'opération d'emboîtement la force de fermeture (F1) est temporairement augmentée par l'écartement radial des bras de ressort (12) de la pièce de raccordement (2), dans lequel des épaulements (20) faisant saillie radialement sont disposés de préférence sur la circonférence extérieure des bras de ressort (12).

5. Raccord de conduite selon l'une quelconque des revendications 1 à 4, **caractérisé en ce que** le tronçon d'emboîtement (8) de la pièce de raccordement (2) est réalisé comme un logement (36) de type manchon pour le tronçon d'emboîtement (10) réalisé comme une pièce enfichable (22) de la pièce de raccordement complémentaire (6).

6. Raccord de conduite selon l'une quelconque des revendications 1 à 5, **caractérisé en ce que** le tronçon d'emboîtement (8) réalise une transition d'une seule pièce avec les bras de ressort (12).

7. Raccord de conduite selon l'une quelconque des revendications 1 à 6, **caractérisé en ce que** plusieurs, de préférence quatre bras de ressort (12) sont prévus dans une répartition circonférentielle à symétrie radiale et en étant séparés les uns des autres respectivement par des fentes axiales et radiales (38).

8. Raccord de conduite selon l'une quelconque des revendications 1 à 7, **caractérisé en ce que** les éléments d'encliquetage (44) des bras d'encliquetage d'ancrage (42) sont réalisés comme des épaulements tournés radialement vers l'intérieur qui coopèrent dans la position de départ par l'intermédiaire de premières surfaces d'encliquetage (50) avec un premier gradin d'encliquetage (46) de la pièce de raccordement (2) ainsi que dans la position d'ancrage par l'intermédiaire de deuxièmes surfaces d'encliquetage (52) avec un deuxième gradin d'encliquetage (48) de la pièce de raccordement (2).

9. Raccord de conduite selon la revendication 8, **caractérisé en ce que** les premières et deuxièmes surfaces d'encliquetage (50, 52) des éléments d'encliquetage (44) des bras d'encliquetage d'ancrage (42) sont respectivement réalisées comme une surface inclinée de type conique qui forment avec l'axe d'emboîtement un premier ou un deuxième angle aigu (α₁/α₂), le premier angle (α₁) des premières surfaces d'encliquetage (50) étant inférieur au deuxième angle (α₂) des deuxièmes surfaces d'encliquetage (52).

10. Raccord de conduite selon l'une quelconque des revendications 1 à 9, **caractérisé en ce que** les bras d'encliquetage d'ancrage (42) partent d'une seule pièce du tronçon formant bague de blocage (40) et s'étendent axialement dans la direction de détachement.

11. Raccord de conduite selon l'une quelconque des revendications 1 à 10, **caractérisé en ce que** l'élément d'ancrage (4) présente un tronçon d'actionnement (54) qui est relié au tronçon formant bague de blocage (40) de telle sorte qu'au moyen du tronçon d'actionnement (54), un actionnement manuel de l'élément d'ancrage (4) est possible sans affecter la mobilité élastique des bras d'encliquetage d'ancrage (42).

12. Raccord de conduite selon la revendication 11, **caractérisé en ce que** le tronçon d'actionnement (54) est relié indépendamment des bras d'encliquetage d'ancrage (42) au tronçon formant bague de blocage (40), et notamment par l'intermédiaire d'entretoises de raccordement (58) disposées respectivement entre les bras d'encliquetage d'ancrage (42).

13. Raccord de conduite selon la revendication 11 ou 12, **caractérisé en ce que** le tronçon d'actionnement (56) est réalisé comme une bague continue qui entoure les bras d'encliquetage d'ancrage (42) de façon coaxiale avec un espacement radial.

14. Raccord de conduite selon la revendication 13, **caractérisé en ce que** le tronçon d'actionnement (54) réalisé comme une bague est raccordé au niveau de ses zones circonférentielles, respectivement radialement opposées aux bras d'encliquetage d'ancrage (42), par l'intermédiaire de tronçons de raccordement (60) supplémentaires, directement au tronçon formant bague de blocage (40).

15. Raccord de conduite selon l'une quelconque des revendications 1 à 14, **caractérisé en ce que** les bras de ressort (12) de la pièce de raccordement (2) présentent au niveau de leurs extrémités libres des épaulements (62) faisant saillie radialement vers l'extérieur comme des butées d'extrémité pour l'élément d'ancrage (4).

16. Raccord de conduite selon l'une quelconque des revendications 1 à 15, **caractérisé en ce que**, à la suite du tronçon d'emboîtement (8), la pièce de raccordement (2) présente au moins un embout de raccordement (64) pour une conduite d'un milieu.

17. Raccord de conduite selon l'une quelconque des revendications 5 à 16, **caractérisé en ce que** la pièce enfichable (22) de la pièce de raccordement complémentaire (6) présente à son extrémité libre un tronçon d'étanchéité (24) avec une bague d'étanchéité (28) reposant sur un écrou annulaire (26).

18. Raccord de conduite selon la revendication 17, **caractérisé en ce que** le tronçon d'étanchéité (24) est suivi d'une zone (32) élargie en section transversale par l'intermédiaire d'une surface conique (30) et qui passe par l'intermédiaire du cran d'encliquetage (16) à une zone amincie (34).

19. Raccord de conduite selon la revendication 18, **caractérisé en ce que** la surface conique (30) prévue lors de l'opération d'emboîtement pour l'écartement radial des bras de ressort (12) de la pièce de raccordement (2) forme avec l'axe d'emboîtement un angle (β₁) relativement plat qui est en particulier de l'ordre de 20°.

20. Raccord de conduite selon la revendication 18 ou 19, **caractérisé en ce que** le gradin d'encliquetage (16) est réalisé comme une surface inclinée conique avec un angle (β₂) relativement plus raide par rapport à l'axe d'emboîtement, en particulier d'environ 50°.
